# EUROPEAN PATENT SPECIFICATION

(11) **EP 2 848 169 B1**
(45) Date of publication and mention of the grant of the patent: **09.03.2016**
(21) Application number: 13380036.7
(22) Date of filing: 11.09.2013
(51) Int. Cl.: A47J 37/04, A47J 37/06

(54) **Hot air cooking device**
Heißluftkochvorrichtung
Dispositif de cuisson à l'air chaud

(43) Date of publication of application: 18.03.2015
(73) Proprietor: Compania Espanola de Electromenaje, SA, 25790 Oliana (Lleida) (ES)
(72) Inventor: Trench Roca, Lluís, 08650 Sallent (Barcelona) (ES); Alet Vidal, Josep, 25790 Oliana (Lleida) (ES); Montraveta Montraveta, Fidel, 25790 Oliana (Lleida) (ES)
(74) Representative: Juncosa Miro, Jaime

(56) References cited:
- WO-A2-99/63290
- US-A- 5 676 870
- US-A1- 2002 036 195

## Description

### Field of the Art

The present invention relates to an apparatus for cooking foods using hot air provided with means for circulating a hot air flow between pieces of food arranged in a food container inside a cooking chamber.

### Background of the Invention

Document DE 20214744 U1 discloses an apparatus for cooking foods using hot air having a fan circulating an air stream in a closed circuit through an electrical resistance or air heating unit and through the inside of an extractable container in which pieces of food have been placed. Means for controlling said air heating unit have been envisaged.

Document WO 2007144432 A1 describes an apparatus for cooking foods using hot air having a housing inside which there is a cooking chamber. In an upper region of the cooking chamber there is a heating element surrounded by a channeling hood comprising a lower edge and an upper outlet located below a fan. The apparatus further comprises an extractable food container that can be placed in a cooking position inside said cooking chamber. This food container has a perforated lower wall and air-impermeable side walls having an upper edge defining an upper opening. In the cooking position, said upper edge of the air-impermeable side walls of the food container is adjacent to the lower edge of the channeling hood, and the air-impermeable side walls and the perforated lower wall of the cooking container are separated from side walls and a bottom wall of the cooking chamber, respectively. In said bottom wall of the cooking chamber there are deflectors directing the air towards the perforated lower wall of the food container.

Therefore, in said document WO 2007144432 A1, the fan moves a hot air flow inside the cooking chamber which penetrates the perforated lower wall of the food container, passes through it and through the heating element, exits through the upper outlet of the channeling hood and returns to the perforated lower wall of the food container through the annular space between the air-impermeable side walls of the cooking container and the side walls of the cooking chamber.

A drawback of the apparatus described in said document WO 2007144432 A1 is that the air-impermeable side walls of the cooking container have a considerable height and cooperate with the channeling hood so as to not leave a free space in communication with the rest of the cooking chamber between the upper opening of the cooking container and the heating element. This allows only a vertical hot air flow through the food container from the perforated lower wall to the upper opening thereof, and the considerable height of the air-impermeable side walls of the cooking container allow such an accumulation of foods therein that in practice it interrupts the air flow through the foods, resulting in irregular cooking since the foods closest to the perforated lower wall of the food container tend to be completely cooked while the foods closest to the upper opening of the food container are still raw.

Document WO 2012168897 A1 discloses an advance in the apparatus for cooking foods using hot air described in said document WO 2007144432 A1, where the housing of the apparatus includes a hot air vent discharging out of the apparatus in communication with the cooking chamber and cooling channels in communication with said hot air vent through a reduced cross-sectional area that creates a Venturi effect that moves a cooling air flow through said cooling channels. The cooling air flow is used to cool an upper section of the housing where a motor for driving the fan and other components are located. A drawback of this arrangement is that the cooling air flow is achieved at the cost of a loss of the hot air flow heated by the heating element, with the subsequent waste of energy.

Document US -A1- 2002/ 00336195 shows an apparatus for cooking foods using hot air according to the preamble of claim 1.

### Brief Description of the Invention

The present invention helps to mitigate the aforementioned and other drawbacks by providing an apparatus for cooking foods using hot air comprising a housing, a cooking chamber inside said housing, a food container provided with a perforated lower wall and an upper opening, and which can be moved between a cooking position inside said cooking chamber and an extracted position, a heating element arranged over said upper opening of said food container when it is in said cooking position, and a circulation fan moving a hot air flow inside the cooking chamber, through the food container and through said heating element.

The food container has perforated side walls connected to the perforated lower wall, and an upper edge of said perforated side walls defines said upper opening. The food container has a container height equal to or less than 60 mm measured from a lower surface of said perforated lower wall to said upper edge of the perforated side walls. Therefore, the low height of the perforated side walls of the food container assures that the pieces of food that can be placed in the food container are not piled up, or at the most they are arranged in a few superimposed layers, in particular only two layers, which, in combination with the air-permeable nature of the perforated side walls and the perforated lower wall, allows the hot air flow to easily circulate therethrough.

When the food container is inside the cooking chamber in the cooking position, said upper edge of the perforated side walls of the food container is separated from a lower surface of the heating element by an upper distance, which is in the range of 3/5 to 5/3 of the container height. This prevents the foods located in an upper level of the food container from being toasted or burnt by infrared radiation given off from the heating element, and it assures a free space in communication with the rest of the cooking chamber between the upper opening of the food container and the heating element through which the hot air flow moved by the circulation fan is moved in all directions.

In said cooking position, the food container is supported on a bottom wall of the cooking chamber by supports which maintain a lower distance between said lower surface of the perforated lower wall of the food container and an upper surface of said bottom wall of the cooking chamber such that it provides a space below the food container through which the hot air flow circulates. Said lower distance is preferably in the range of 1/6 to 1/3 of the container height.

Likewise, when the food container is in the cooking position, there is a gap between the perforated side walls of the food container and side walls of the cooking chamber through which the hot air flow also circulates. The upper surface of the bottom wall of the cooking chamber is flat and smooth, and the side walls of the cooking chamber are connected to the bottom wall by rounded wall portions, promoting the circulation of the hot air flow in all directions in said space below the food container.

The food container is preferably made of wire mesh, although it could alternatively be made of any other air-permeable material, and said supports are preferably legs attached to the food container, although the supports could alternatively be fixed to the bottom wall of the cooking chamber.

The food container has a handle projecting laterally out of the housing when the food container is in the cooking position. The housing preferably has a side opening in communication with the cooking chamber. This side opening is sized to allow the passage of the food container when it is moved in a substantially horizontal direction between the cooking position and the extracted position. Said handle of the food container is fixed to a closure panel closing said side opening of the housing when the food container is in the cooking position.

Said closure panel has an outer wall providing continuity to the housing and an inner wall laterally closing the cooking chamber when the food container is in the cooking position. There is an air chamber between said outer wall and inner wall. There is a gap between the inner wall of the closure panel and one of the perforated side walls of the food container adjacent thereto through which the hot air flow circulates when the food container is in the cooking position. The inner wall of the closure panel can optionally be connected to the bottom wall of the cooking chamber by a rounded transition.

The apparatus comprises an electric motor operatively connected to drive the circulation fan. Said electric motor and other components are housed in an upper compartment of the housing, which is separated from the cooking chamber by a partition panel, and there is an insulating air chamber between the side walls and bottom wall of the cooking chamber and the housing. The housing has ventilation openings in communication with the upper compartment, and a cooling fan is housed inside the upper compartment for circulating a cooling air flow between the outside and the inside of the housing through said ventilation openings. The cooling fan is driven by the same electric motor driving the circulation fan.

One or more controls configured for controlling one or more operating parameters of the heating element and/or one or more operating parameters of the electric motor driving the circulation fan are installed such that they have one part inside the upper compartment and another part that is accessible from an outer side of the housing.

Optionally, the housing has a viewing window provided with a transparent panel through which at least part of the upper opening of the food container inside the cooking chamber is visible when the food container is in the cooking position.

In an alternative embodiment, the cooking chamber has a lower portion including the bottom wall and the side walls which is connected to a bottom wall of the housing by a guiding device and fixed to the closure panel. This lower portion of the cooking chamber is open in the upper portion and sized to receive the food container therein.

Therefore, a lower portion of the cooking chamber can be moved along said guiding device between a cooking position, in which the lower portion of the cooking chamber is inside the housing collaborating with an upper portion of the cooking chamber such that it substantially closes the cooking chamber and in which the food container is in its cooking position, and an extracted position, in which the lower portion of the cooking chamber is at least partially outside the housing such that the food container can be extracted and placed in the lower portion of the cooking chamber.

### Brief Description of the Drawings

The preceding and other features and advantages will become more evident from the following detailed description of exemplary embodiments with reference to the attached drawings, in which:
Figure 1 is a perspective view of an apparatus for cooking foods using hot air according to an embodiment of the present invention, with a food container in a cooking position;
Figure 2 is a perspective view of the apparatus of Figure 1 with the food container in an extracted position;
Figure 3 is a plan view of the apparatus of Figure 1 with the food container in the cooking position;
Figure 4 is a cross-section view taken along plane IV-IV of Figure 3;
Figure 5 is a cross-section view taken along plane V-V of Figure 3; and
Figure 6 is a cross-section view of an apparatus for cooking foods using hot air according to another embodiment of the present invention, with a food container in an extracted position.

### Detailed Description of Exemplary Embodiments

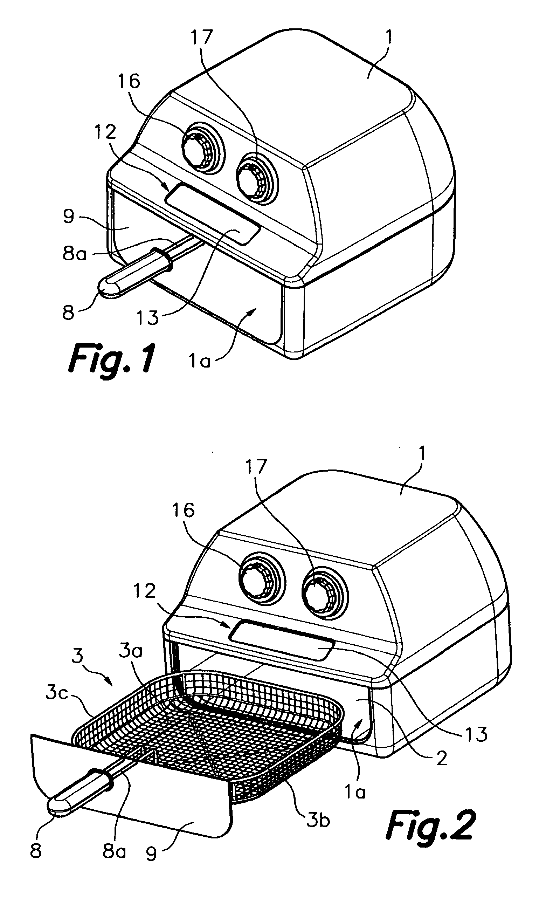

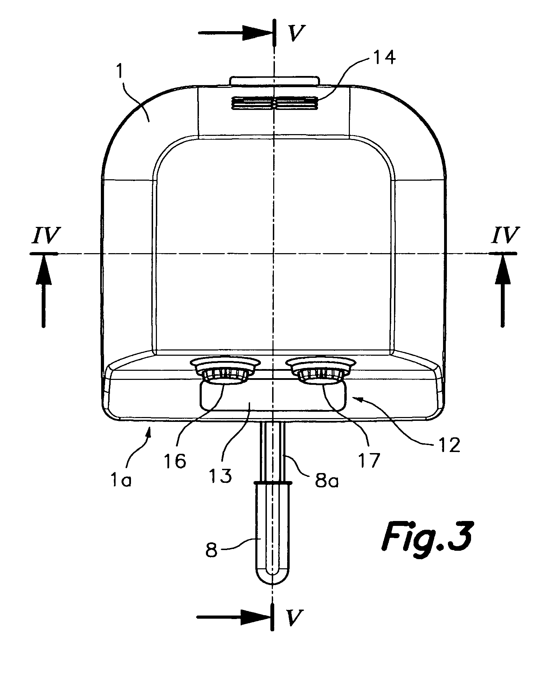

Figures 1 to 5 show an apparatus for cooking foods using hot air according to an embodiment of the present invention, which comprises a housing 1 made of a thermoplastic material, for example, inside which there is a cooking chamber 2 demarcated by a bottom wall 2a and side walls 2b which are made of a metallic material, for example, such as aluminum or stainless steel sheet. The side walls 2b of the cooking chamber 2 are connected to the bottom wall 2a by rounded wall portions 2c, and the bottom wall 2a has a flat and smooth upper surface.

There is an insulating air chamber 18 between the bottom wall and side walls 2a, 2b, of the cooking chamber 2 and the housing 1. The housing 1 further has an upper compartment 19 separated from the cooking chamber 2 by a partition panel 10 made of a thermoplastic material, for example.

The housing 1 has a side opening 1 a in communication with the cooking chamber 2. This side opening is sized to allow the passage of a food container 3 which can be moved between a cooking position, in which the food container 3 is inside the cooking chamber 2 (Figures 1, 3, 4 and 5), and an extracted position (Figure 2), in which the food container 3 is outside the cooking chamber 2.

The food container 3 is made of wire mesh and has a handle 8 projecting laterally out of the housing 1 when the food container 3 is in the cooking position. Said handle 8 is connected to the food container 3 by rods 8a (Figures 1, 2, 3 and 5) to which a closure panel 9 is fixed, said closure panel 9 closing said side opening 1 a of the housing 1 when the food container 3 is in the cooking position.

Said closure panel 9 has an outer wall providing continuity to the housing 1 and an inner wall 9a laterally closing the cooking chamber 2 when the food container 3 is in the cooking position. Said inner wall 9a of the closure panel 9 can optionally be connected to the bottom wall 2a of the cooking chamber 2 by a rounded section (not shown).

The food container 3 has a perforated lower wall 3a and perforated side walls 3b provided with an upper edge 3c defining an upper opening 4. The perforated side walls 3b are connected to the perforated lower wall 3a by rounded sections. The food container 3 has a container height Ar measured from a lower surface of said perforated lower wall 3a to said upper edge 3c.

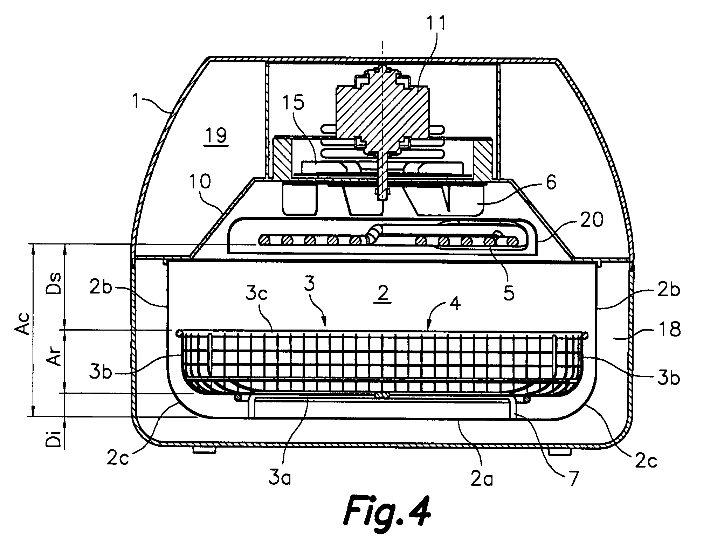

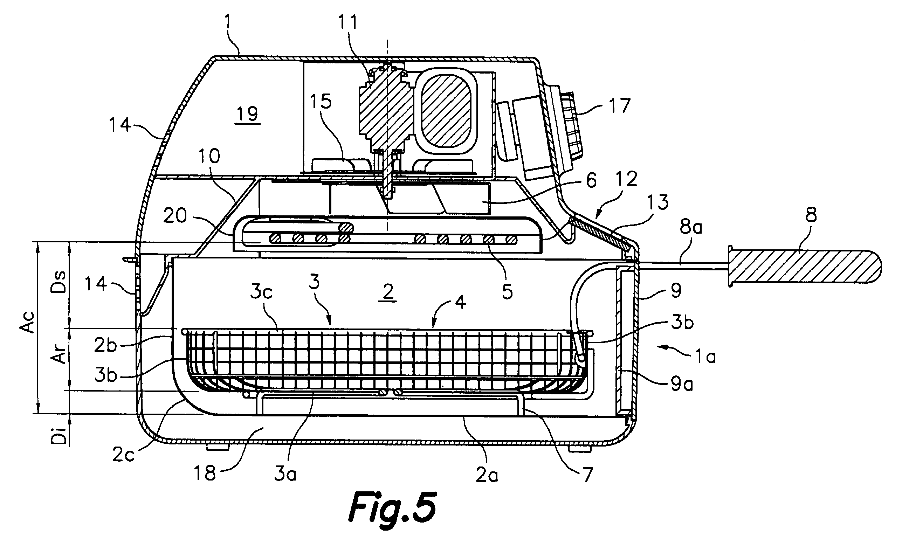

In an upper region of the cooking chamber 2, there is a heating element 5, such as an electrical resistance, for example, which is arranged over said upper opening 4 of the food container 3 when it is in said cooking position (Figures 4 and 5). There is a circulation fan 6 above the heating element 5 and below said partition panel 10 moving a hot air flow inside the cooking chamber 2, through the food container 3 and through said heating element 5.

The heating element 5 is surrounded by a channeling hood 20 which in turn is located in an upper portion of the cooking chamber 2 demarcated by a frustoconical portion of the partition panel 10. Said channeling hood 20 has a lower opening located at a level slightly below the heating element 5 and an upper opening located between the heating element 5 and the circulation fan 6.

When the food container 3 is in the cooking position, said upper edge 3c of the perforated side walls 3b of the food container 3 is separated from a lower surface of the heating element 5 by an upper distance Ds, such that between the upper opening 4 of the food container 3 and the heating element 5 there is a free space in communication with the rest of the cooking chamber 2 through which said hot air flow can circulate in all directions.

The food container 3 has supports 7, such as legs, attached to the lower part thereof which project downwards from the perforated lower wall 3a, and said supports 7 support the food container 3 in said cooking position on the bottom wall 2a of the cooking chamber 2. These supports 7 are sized such that they maintain a lower distance Di between a lower surface of the perforated lower wall 3a of the food container 3 and the upper surface of said bottom wall 2a of the cooking chamber 2, providing a free space below the food container 3 through which said hot air flow can circulate in all directions.

Based on the foregoing, it is deduced that the cooking chamber 2 has a chamber height Ac measured from the upper surface of the bottom wall 2a to the lower surface of the heating element 5 which is equivalent to the container height Ar plus said upper distance Ds and lower distance Di.

Furthermore, when the food container 3 is in the cooking position, there are gaps between the perforated side walls 3b of the food container 3 and the side walls 2b of the cooking chamber 2, as well as between one of the perforated side walls 3b of the food container 3 adjacent to the closure panel 9 and the inner wall 9a of the closure panel 9, through which the hot air flow can freely circulate.

The following parameters must be complied with for effective and efficient operation of the apparatus of the present invention:
- Said container height Ar must be equal to or less than 60 mm.
- The upper distance Ds must be in the range of 3/5 to 5/3 of the container height Ar.

It is also preferable for the lower distance Di to be in the range of 1/6 to 1/3 of the container height Ar.

By way of example, a food container 3 with a container height Ar equal to 60 mm would have a corresponding upper distance As of 36 to 100 mm and a lower distance Di of 10 to 20 mm.

It has been verified that the aforementioned measurements and ratios assure proper circulation of the hot air fluid through the inside of the entire cooking chamber 2, through the food container 3, through the pieces of food placed inside the food container 3, and through the heating element 5 without the risk of the foods on the surface being toasted or burnt.

An electric motor 11 having an output shaft going through a hole of the partition panel 10 and directly connected to the circulation fan 6 located below the partition panel 10 is housed in said upper compartment 19. A cooling fan 15 which is also connected to the output shaft of said electric motor 11 is arranged inside the upper compartment 19 and above the partition panel 10, such that the same electric motor 11 drives both the circulation fan 6 and cooling fan15.

The apparatus further comprises controls 16, 17 having one part housed inside the upper compartment 19 of the housing 1 and another part that is accessible from an outer side of the housing 1. These controls 16, 17 are configured for controlling one or more operating parameters of the heating element 5 and/or one or more operating parameters of the electric motor 11 driving the circulation fan 6.

In a side opposite the side opening 1a, the housing 1 has ventilation openings 14 in communication with the upper compartment 19 through which the hot air from inside the upper compartment 19 is expelled out. This helps to cool the electric motor 11 and other components housed in the upper compartment 19.

In a side adjacent to the side opening 1a and thereabove, the housing 1 further has a viewing window 12 provided with a transparent panel 13 through which at least part of the upper opening 4 of the food container 3 is visible when the food container 3 is housed inside the cooking chamber 2 in the cooking position. The viewing window 12 therefore allows visual control of the cooking state of the foods while cooking them without needing to open the closure panel 9 or extract the food container 3.

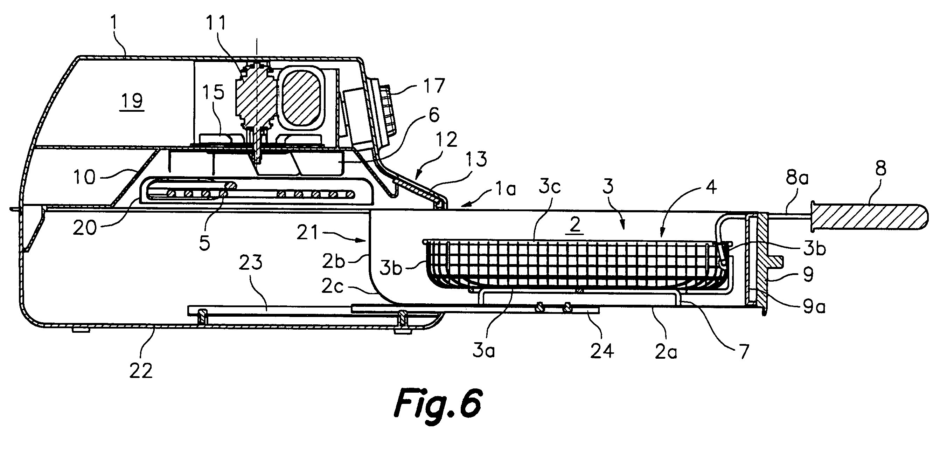

Figure 6 shows an apparatus for cooking foods using hot air according to another embodiment of the present invention which essentially comprises the same elements as the embodiment described above in relation with Figures 1 to 5, and the elements common to both embodiments are designated using the same reference numbers.

The main difference of the embodiment shown in Figure 6 with respect to the embodiment shown in Figures 1 to 5 is that the cooking chamber 2 has a lower portion 21 including the bottom wall 2a and the side walls 2b connected to the bottom wall 2a by the rounded wall portions 2c, and this lower portion 21 of the cooking chamber 2 is connected to a bottom wall 22 of the housing 1 by a guiding device including a fixed guide element 23 fixed to said bottom wall 22 of the housing 1 and a moving guide element 24 fixed to the bottom wall 2a of the lower portion 21 of the cooking chamber 2.

The bottom wall 2a and the side walls 2b of the lower portion 21 of the cooking chamber 2 are fixed to the closure panel 9, which has an outer wall configured for fitting in the side opening 1a of the housing 1 and an inner wall 9a laterally closing the lower portion 21 of the cooking chamber 2. The food container 3 is sized to be placed inside the lower portion 21 of the cooking chamber 2 and extracted therefrom. The rods 8a connecting the handle 8 to the food container 3 are not fixed to the closure panel 9 but simply housed in notches (not shown) in an upper edge of the closure panel.

Therefore, the lower portion 21 of the cooking chamber 2 can be moved with the food container 3 inside it along said guiding device between a cooking position (not shown), in which the lower portion 21 of the cooking.chamber 2 is facing the upper portion of the cooking chamber 2 demarcated by said frustoconical portion of the partition panel 10, substantially closing the cooking chamber 2, and the upper opening 4 of the food container 3 is below and facing the heating element 5, and an open position, in which a significant part of the lower portion 21 of the cooking chamber 2 is outside the housing 1 such that the food container 3 can be extracted from and placed in the lower portion 21 of the cooking chamber 2.

The embodiment shown in Figure 6 also complies with the container height Ar being equal to or less than 60 mm, the upper distance Ds being in the range of 3/5 to 5/3 of the container height Ar, and the lower distance Di being in the range of 1/6 to 1/3 of the container height Ar.

The scope of the invention is defined in the attached claims.

## Claims

1. An apparatus for cooking foods using hot air, comprising
a housing (1)
a cooking chamber (2) inside said housing (1)
a food container (3) provided with a perforated lower wall (3a) and an upper opening (4), and which can be moved between a cooking position inside said cooking chamber (2) inside the housing (1) and an extracted position,
a heating element (5) arranged over said upper opening (4) of said food container (3) in said cooking position, and
a circulation fan (6) moving a hot air flow inside the cooking chamber (2), through the food container (3) and through said heating element (5),
the food container (3) has perforated side walls (3b) having an upper edge (3c) defining said upper opening (4), the food container (3) having a container height (Ar) equal to or less than 60 mm measured between a lower surface of said perforated lower wall (3a) and said upper edge (3c), and **characterized in that**
in the cooking position, the upper edge (3c) of said perforated side walls (3b) of the food container (3) is separated from a lower surface of the heating element (5) by an upper distance (Ds), where said upper distance (Ds) is comprised in the range of 3/5 to 5/3 of said container height (Ar).

2. The apparatus for cooking foods using hot air according to claim 1, **characterized in that** supports (7) support the food container (3) in said cooking position on a bottom wall (2a) of the cooking chamber (2), said supports (7) maintaining a lower distance (Di) between a lower surface of the perforated lower wall (3a) of the food container (3) and said upper surface of said bottom wall (2a) of the cooking chamber (2), where said lower distance (Di) is comprised in the range of 1/6 to 1/3 of said container height (Ar).

3. The apparatus for cooking foods using hot air according to claim 1 or 2, **characterized in that** when the food container (3) is in the cooking position, there is a gap between the perforated side walls (3b) of the food container (3) and side walls (2b) of the cooking chamber (2) through which said hot air flow circulates.

4. The apparatus for cooking foods using hot air according to claim 1, 2 or 3, **characterized in that** the food container (3) has a handle (8) projecting laterally out of the housing (1) when the food container (3) is in the cooking position.

5. The apparatus for cooking foods using hot air according to any one of the preceding claims, **characterized in that** the food container (3) is made of wire mesh.

6. The apparatus for cooking foods using hot air according to claim 2, **characterized in that** said supports (7) are legs attached to the food container (3).

7. The apparatus for cooking foods using hot air according to claim 4, 5 or 6, **characterized in that** the housing (1) has a side opening (1a) in communication with the cooking chamber (2) and sized for the passage of at least the food container (3) when it is moved between the cooking position and the extracted position, and a closure panel (9) closing said side opening (1a) of the housing (1) when the food container (3) is in the cooking position is provided.

8. The apparatus for cooking foods using hot air according to claim 7, **characterized in that** said closure panel (9) has an inner wall (9a) laterally closing the cooking chamber (2) when the food container (3) is in the cooking position, there being a gap between this inner wall (9a) of the closure panel (9) and one of the perforated side walls (3b) of the food container (3) adjacent thereto through which said hot air flow circulates.

9. The apparatus for cooking foods using hot air according to claim 7 or 8, **characterized in that** said handle (8) of the food container (3) is fixed to said closure panel (9).

10. The apparatus for cooking foods using hot air according to claim 7 or 8, **characterized in that** the cooking chamber (2) has a lower portion (21) connected to a bottom wall (22) of the housing (1) by a guiding device (23, 24) and fixed to said closure panel (9), where said lower portion (21) of the cooking chamber (2) is sized to receive the food container (3), and where the lower portion (21) of the cooking chamber (2) can be moved along said guiding device (23, 24) between a cooking position, in which the lower portion (21) of the cooking chamber (2) is inside the housing (1) where it collaborates with an upper portion of the cooking chamber (2) to substantially close the cooking chamber (2) and the food container (3) is in its cooking position, and an extracted position, in which the lower portion (21) of the cooking chamber (2) is at least partially outside the housing (1) and the food container (3) can be extracted from and placed in the lower portion (21) of the cooking chamber (2).

11. The apparatus for cooking foods using hot air according to any one of claims 7 to 10, **characterized in that** the housing (1) has an upper compartment (19) separated from the cooking chamber (2) by a partition panel (10), and an electric motor (11) operatively connected to drive said circulation fan (6) is housed in said upper compartment (19).

12. The apparatus for cooking foods using hot air according to claim 11, **characterized in that** the housing (1) has ventilation openings (14) in communication with the upper compartment (19), and a cooling fan (15) driven by said electric motor (11) is housed inside the upper compartment (19).

13. The apparatus for cooking foods using hot air according to any one of claims 7 to 12, **characterized in that** there is an insulating air chamber (18) between the bottom wall and side walls (2a, 2b) of the cooking chamber (2) and the housing (1).

14. The apparatus for cooking foods using hot air according to any one of the preceding claims, **characterized in that** the housing (1) has a viewing window (12) provided with a transparent panel (13) through which at least part of the upper opening (4) of the food container (3) inside the cooking chamber (2) is visible when the food container (3) is in the cooking position, and it includes one or more controls (16, 17) configured for controlling one or more operating parameters of the heating element (5) and/or one or more operating parameters of the electric motor (11) driving the circulation fan (6) which are accessible on an outer side of the housing (1).

15. The apparatus for cooking foods using hot air according to claim 1, **characterized in that** the cooking chamber (2) has a bottom wall (2a) with a flat and smooth upper surface, and side walls (2b) connected to said bottom wall (2a) by rounded wall portions (2c).

## Patentansprüche

1. Vorrichtung zum Garen von Lebensmitteln unter Verwendung von Heißluft, umfassend
ein Gehäuse (1)
einen Garraum (2) innerhalb des genannten Gehäuses (1)
einen Lebensmittelbehälter (3), welcher mit einer durchlochten unteren Wand (3a) und einer oberen Öffnung (4) versehen ist, und welcher zwischen einer Garstellung innerhalb des genannten Garraums (2) innerhalb des Gehäuses (1) und einer entnommenen Stellung, bewegt werden kann,
ein Heizelement (5), welches über die genannte obere Öffnung (4) des genannten Lebensmittelbehälters (3) in der genannten Garstellung angeordnet ist, und
einen Umlüfter (6), welcher einen Heißluftstrom innerhalb des Garraums (2), durch den Lebensmittelbehälter (3) und durch das genannte Heizelement (5), bewegt,
wobei der Lebensmittelbehälter (3) durchlochte Seitenwände (3b) aufweist, welche einen oberen Rand (3c) aufweisen, der die genannte obere Öffnung (4) definiert, wobei der Lebensmittelbehälter (3) eine Behälterhöhe (Ar) aufweist, die gleich oder kleiner als 60 mm ist, gemessen zwischen einer unteren Oberfläche der genannten durchlochten unteren Wand (3a) und des genannten oberen Rands (3c), und
**dadurch gekennzeichnet, dass**
in der Garstellung, der obere Rand (3c) der genannten durchlochten Seitenwände (3b) des Lebensmittelbehälters (3) von einer unteren Oberfläche des Heizelements (5) mit einem oberen Abstand (Ds) getrennt ist, wobei sich der genannte obere Abstand (Ds) in dem Bereich von 3/5 bis 5/3 der genannten Behälterhöhe (Ar) befindet.

2. Vorrichtung zum Garen von Lebensmitteln unter Verwendung von Heißluft nach Anspruch 1, **dadurch gekennzeichnet, dass** Stützen (7) den Lebensmittelbehälter (3) in der genannten Garstellung auf einer unteren Wand (2a) des Garraums (2) abstützen, wobei die genannten Stützen (7) einen unteren Abstand (Di) zwischen einer unteren Oberfläche der durchlochten unteren Wand (3a) des Lebensmittelbehälters (3) und der genannten oberen Oberfläche der genannten unteren Wand (2a) des Garraums (2) halten, wobei sich der genannte untere Abstand (Di) in dem Bereich von 1/6 bis 1/3 der genannten Behälterhöhe (Ar) befindet.

3. Vorrichtung zum Garen von Lebensmitteln unter Verwendung von Heißluft nach Anspruch 1 oder 2, **dadurch gekennzeichnet, dass** wenn sich der Lebensmittelbehälter (3) in der Garstellung befindet, sich einen Spalt zwischen den durchlochten Seitenwänden (3b) des Lebensmittelbehälters (3) und den Seitenwänden (2b) des Garraums (2) bildet, durch den der genannte Heißluftstrom strömt.

4. Vorrichtung zum Garen von Lebensmitteln unter Verwendung von Heißluft nach Anspruch 1, 2 oder 3, **dadurch gekennzeichnet, dass** der Lebensmittelbehälter (3) einen Griff (8) aufweist, welcher seitlich von dem Gehäuse (1) herausragt, wenn sich der Lebensmittelbehälter (3) in der Garstellung befindet.

5. Vorrichtung zum Garen von Lebensmitteln unter Verwendung von Heißluft nach einem der vorhergehenden Ansprüche, **dadurch gekennzeichnet, dass** der Lebensmittelbehälter (3) aus Drahtgewebe hergestellt ist.

6. Vorrichtung zum Garen von Lebensmitteln unter Verwendung von Heißluft nach Anspruch 2, **dadurch gekennzeichnet, dass** die genannten Stützen (7) Füße sind, welche mit dem Lebensmittelbehälter (3) verbunden sind.

7. Vorrichtung zum Garen von Lebensmitteln unter Verwendung von Heißluft nach Anspruch 4, 5 oder 6, **dadurch gekennzeichnet, dass** das Gehäuse (1) eine Seitenöffnung (1a) in Verbindung mit dem Garraum (2) aufweist und welche so dimensioniert ist, dass sie den Durchgang von zumindest dem Lebensmittelbehälter (3) ermöglicht, wenn er zwischen der Garstellung und der entnommenen Stellung bewegt wird, und wobei eine Abschlussplatte (9) vorgesehen ist, welche die genannte Seitenöffnung (1a) des Gehäuses (1) abschließt, wenn sich der Lebensmittelbehälter (3) in der Garstellung befindet.

8. Vorrichtung zum Garen von Lebensmitteln unter Verwendung von Heißluft nach Anspruch 7, **dadurch gekennzeichnet, dass** die genannte Abschlussplatte (9) eine innere Wand (9a) aufweist, welche den Garraum (2) seitlich abschließt, wenn sich der Lebensmittelbehälter (3) in der Garstellung befindet, wobei sich ein Spalt zwischen dieser inneren Wand (9a) der Abschlussplatte (9) und einer der durchlochten Seitenwände (3b) des Lebensmittelbehälters (3), welche an derselben anliegt, bildet, durch welchen der genannte Heißluftstrom strömt.

9. Vorrichtung zum Garen von Lebensmitteln unter Verwendung von Heißluft nach Anspruch 7 oder 8, **dadurch gekennzeichnet, dass** der genannte Griff (8) des Lebensmittelbehälters (3) an der genannten Abschlussplatte (9) befestigt ist.

10. Vorrichtung zum Garen von Lebensmitteln unter Verwendung von Heißluft nach Anspruch 7 oder 8, **dadurch gekennzeichnet, dass** der Garraum (2) einen unteren Bereich (21) aufweist, welcher mit einer unteren Wand (22) des Gehäuses (1) durch eine Führungsvorrichtung (23, 24) verbunden und an der genannten Abschlussplatte (9) befestigt ist, wobei der genannte untere Bereich (21) des Garraums (2) so dimensioniert ist, dass er den Lebensmittelbehälter (3) aufnimmt, und wobei der untere Bereich (21) des Garraums (2) entlang der genannten Führungsvorrichtung (23, 24) zwischen einer Garstellung, in welcher sich der untere Bereich (21) des Garraums (2) innerhalb des Gehäuses (1) befindet, wo er mit einem oberen Bereich des Garraums (2) zusammenwirkt, um den Garraum (2) wesentlich abzuschließen und sich der Lebensmittelbehälter (3) in seiner Garstellung befindet, und einer entnommenen Stellung, in welcher sich der untere Bereich (21) des Garraums (2) zumindest teilweise außerhalb des Gehäuses (1) befindet und der Lebensmittelbehälter (3) entnommen und in den unteren Bereich (21) des Garraums (2) gestellt werden kann, bewegt werden kann.

11. Vorrichtung zum Garen von Lebensmitteln unter Verwendung von Heißluft nach einem der Ansprüche 7 bis 10, **dadurch gekennzeichnet, dass** das Gehäuse (1) ein oberes Fach (19) aufweist, welches von dem Garraum (2) durch eine Trennplatte (10) getrennt ist, und ein Elektromotor (11), welcher zum Antrieb des genannten Umlüfters (6) wirksam angeschlossen ist, in dem genannten oberen Fach (19) aufgenommen ist.

12. Vorrichtung zum Garen von Lebensmitteln unter Verwendung von Heißluft nach Anspruch 11, **dadurch gekennzeichnet, dass** das Gehäuse (1) Belüftungsöffnungen (14) in Verbindung mit dem oberen Fach (19) aufweist und ein Kühlgebläse (15), welches von dem genannten Elektromotor (11) angetrieben wird, innerhalb des oberen Fachs (19) aufgenommen ist.

13. Vorrichtung zum Garen von Lebensmitteln unter Verwendung von Heißluft nach einem der Ansprüche 7 bis 12, **dadurch gekennzeichnet, dass** es eine Isolierluftkammer (18) zwischen der unteren Wand und den Seitenwänden (2a, 2b) des Garraums (2) und des Gehäuses (1) gibt.

14. Vorrichtung zum Garen von Lebensmitteln unter Verwendung von Heißluft nach einem der vorhergehenden Ansprüche, **dadurch gekennzeichnet, dass** das Gehäuse (1) ein Sichtfenster (12) aufweist, welches mit einer durchsichtigen Platte (13) versehen ist, durch das zumindest Teil der oberen Öffnung (4) des Lebensmittelbehälters (3) innerhalb des Garraums (2) sichtbar ist, wenn sich der Lebensmittelbehälter (3) in der Garstellung befindet, und aufweisend ein oder mehrere Stellmittel (16, 17), welche dazu ausgebildet sind, einen oder mehrere Betriebsparameter des Heizelements (5) und/oder einen oder mehrere Betriebsparameter des Elektromotors (11), welcher den Umlüfter (6) antreibt, zu regeln, welche an einer äußeren Seite des Gehäuses (1) zugänglich sind.

15. Vorrichtung zum Garen von Lebensmitteln unter Verwendung von Heißluft nach Anspruch 1, **dadurch gekennzeichnet, dass** der Garraum (2) eine untere Wand (2a) mit einer flachen und glatten oberen Oberfläche, und Seitenwände (2b), welche mit der genannten unteren Wand (2a) durch abgerundete Wandbereiche (2c) verbunden sind, aufweist.

## Revendications

1. Appareil de cuisson d'aliments utilisant de l'air chaud, comportant un bâti (1)
une chambre de cuisson (2) à l'intérieur de ce bâti (1)
un récipient pour aliments (3) pourvu d'une cloison inférieure perforée (3a) et d'une ouverture supérieure (4) et pouvant être déplacé entre une position de cuisson à l'intérieur de cette chambre de cuisson (2) à l'intérieur du bâti (1) et une position retirée,
un élément chauffant (5) aménagé au-dessus de cette ouverture supérieure (4) de ce récipient pour aliments (3) dans cette position de cuisson, et
un ventilateur de circulation (6) produisant un courant d'air chaud à l'intérieur de la chambre de cuisson (2) à travers le récipient pour aliments (3) et à travers cet élément chauffant (5),
le récipient pour aliments (3) possède des cloisons latérales perforées (3b) ayant un bord supérieur (3c) définissant cette ouverture supérieure (4), le récipient pour aliments (3) ayant une hauteur du récipient (Ar) égale ou inférieure à 60 mm mesurée entre une surface inférieure de cette cloison inférieure perforée (3a) et ce bord supérieur (3c) et **caractérisé en ce que**
dans la position de cuisson, le bord supérieur (3c) de ces parois latérales perforées (3b) du récipient pour aliments (3) est écarté de la surface inférieure de l'élément chauffant (5) par une distance supérieure (Ds) dans laquelle cette distance supérieure (Ds) se situe dans la fourchette de 3/5 à 5/3 de cette hauteur du récipient (Ar).

2. L'appareil de cuisson d'aliments utilisant de l'air chaud, conformément à la revendication 1, **caractérisé en ce que** des supports (7) supportent le récipient de cuisson (3) dans cette position de cuisson sur une cloison de base (2a) de la chambre de cuisson (2) ces supports (7) conservant un écart inférieur (Di) entre une surface inférieure de la cloison inférieure perforée (3a) du récipient pour aliments (3) et cette surface supérieure de cette cloison de base (2a) de la chambre de cuisson (2), où cet écart inférieur (Di) se situe dans la fourchette de 1/6 à 1/3 de cette hauteur du récipient (Ar).

3. L'appareil de cuisson d'aliments utilisant de l'air chaud, conformément à la revendication 1 ou 2, **caractérisé en ce que** lorsque le récipient pour aliments (3) se trouve dans la position de cuisson, il existe un écart entre les cloisons latérales perforées (3b) du récipient pour aliments (3) et les parois latérales (2b) de la chambre de cuisson (2) à travers lequel ce courant d'air chaud circule.

4. L'appareil de cuisson d'aliments utilisant de l'air chaud, conformément à la revendication 1, 2 ou 3, **caractérisé en ce que** le récipient pour aliments (3) possède un manche (8) se projetant latéralement à l'extérieur du bâti (1) lorsque le récipient de cuisson (3) se trouve dans la position de cuisson.

5. L'appareil de cuisson d'aliments utilisant de l'air chaud, conformément à une quelconque des revendications précédentes, **caractérisé en ce que** le récipient pour aliments (3) est fait en treillis métallique

6. L'appareil de cuisson d'aliments utilisant de l'air chaud, conformément à la revendication 2, **caractérisé en ce que** ces supports (7) sont des pattes accrochées au récipient pour aliments (3).

7. L'appareil de cuisson d'aliments utilisant de l'air chaud, conformément à la revendication 4,5 ou 6 **caractérisé en ce que** le bâti (1) possède une ouverture latérale (1a) en communication avec la chambre de cuisson (2) et ayant une taille permettant le passage d'au moins le récipient pour aliments (3) lorsqu'il est déplacé entre la position de cuisson et la position retirée et un panneau de fermeture (9) fermant cette ouverture latérale (1 a) du bâti (1) lorsque le récipient pour aliments (3) se trouve dans la position de cuisson.

8. L'appareil de cuisson d'aliments utilisant de l'air chaud, conformément à la revendication 7, **caractérisé en ce que** ce panneau de fermeture (9) possède une cloison intérieure (9a) fermant latéralement la chambre de cuisson (2) lorsque le récipient pour aliments (3) se trouve dans la position de cuisson, un écart existant entre cette paroi intérieure (9a) du panneau de fermeture (9) et une des parois latérales perforées (3b) du récipient pour aliments (3) adjacent à celui-ci à travers laquelle circule ce courant d'air chaud.

9. L'appareil de cuisson d'aliments utilisant de l'air chaud, conformément à la revendication 7 ou 8, **caractérisé en ce que** ce manche (8) du récipient pour aliments (3) est fixé sur ce panneau de fermeture (9).

10. L'appareil de cuisson d'aliments utilisant de l'air chaud, conformément à la revendication 7 ou 8, **caractérisé en ce que** la chambre de cuisson (2) possède une portion inférieure (21) reliée à la cloison de base (22) du bâti (1) par un dispositif de guidage (23, 24) et fixée sur ce panneau de fermeture (9), où la portion inférieure (21) de la chambre de cuisson (2) a un taille permettant de recevoir le récipient pour aliments (3), et où la portion inférieure (21) de la chambre de cuisson (2) peut être déplacée le long de ce dispositif de guidage (23, 24) entre une position de cuisson, dans laquelle la portion inférieure (21) de la chambre de cuisson (2) se trouve à l'intérieur du bâti (1) où elle collabore avec la portion supérieure de la chambre de cuisson (2) pour sensiblement fermer la chambre de cuisson (2) et le récipient pour aliments (3) se trouve dans la position de cuisson, et une position retirée, dans laquelle la portion inférieure (21) de la chambre de cuisson (2) se trouve au moins en partie à l'extérieur du bâti (1) et le récipient de cuisson (3) peut en être retiré et placé dans la position inférieure (21) de la chambre de cuisson (2).

11. L'appareil de cuisson d'aliments utilisant de l'air chaud, conformément à une quelconque revendication 7 à 10, **caractérisé en ce que** le bâti (1) possède un compartiment supérieur (19) séparé de la chambre de cuisson (2) par un panneau de séparation (10) et un moteur électrique (11) fonctionnellement relié pour entraîner ce ventilateur de circulation (6) est logé dans ce compartiment supérieur (19).

12. L'appareil de cuisson d'aliments utilisant de l'air chaud, conformément à la revendication 11, **caractérisé en ce que** le bâti (1) possède des ouvertures de ventilation (14) en communication avec le compartiment supérieur (19) et un ventilateur de refroidissement (15) entraîné par ce moteur électrique (11) est logé à l'intérieur du compartiment supérieur (19).

13. L'appareil de cuisson d'aliments utilisant de l'air chaud, conformément à une quelconque des revendications de 7 à 12, **caractérisé en ce qu'**il existe une chambre à air d'isolement (18) entre la paroi de base et les parois latérales (2a, 2b) de la chambre de cuisson (2) et le bâti (1).

14. L'appareil de cuisson d'aliments utilisant de l'air chaud, conformément à une quelconque des revendications précédentes, **caractérisé en ce que** le bâti (1) possède une fenêtre de visualisation (12) pourvue d'un panneau transparent (13) à travers lequel au moins une partie de l'ouverture supérieure (4) du récipient pour aliments (3) à l'intérieur de la chambre de cuisson (2) est visible lorsque le récipient pour aliments (3) se trouve dans la position de cuisson et il comporte un ou plusieurs contrôles (16,17) configurés pour contrôler un ou plusieurs paramètres de l'élément chauffant (5) et/ou un ou plusieurs paramètres de fonctionnement du moteur électrique (11) entraînant le ventilateur de circulation (6) qui sont accessibles sur un côté extérieur du bâti (1).

15. L'appareil de cuisson d'aliments utilisant de l'air chaud, conformément à la revendication 1, **caractérisé en ce que** la chambre de cuisson (2) possède une cloison de base (2a) ayant une surface plate et lisse et des parois latérales (2b) reliées à cette cloison de base (2a) par des portions de cloison arrondies (2c).
